# EUROPÄISCHE PATENTSCHRIFT

(11) **EP 3 684 584 B1**
(45) Veröffentlichungstag und Bekanntmachung des Hinweises auf die Patenterteilung: **06.07.2022**
(21) Anmeldenummer: 18773173.2
(22) Anmeldetag: 19.09.2018
(51) Int. Cl.: B29C 45/77, B29C 45/76, B29C 45/14

(54) **FIXIEREN UND UMSPRITZEN VON EINGELEGTEN BAUTEILEN**
FIXATION AND OVERMOLDING OF INSERTS
FIXATION ET SURMOULAGE D'INSERT

(30) Priorität: 19.09.2017 DE 102017121651
(43) Veröffentlichungstag der Anmeldung: 29.07.2020
(73) Patentinhaber: Lisa Dräxlmaier GmbH, 84137 Vilsbiburg (DE)
(72) Erfinder: SPITZWIESER, Florian, 5221 Lochen am See (AT); PETERLECHNER, Hermann, 5145 Neukirchen (AT); LIEDTKE, Rainer, 5280 Braunau (AT)
(86) Internationale Anmeldenummer: PCT/EP2018/075364
(87) Internationale Veröffentlichungsnummer: WO 2019/057781

(56) Entgegenhaltungen:
- EP-A1- 1 385 684
- EP-A2- 1 074 367
- EP-B1- 1 385 684
- DE-A1- 10 326 794
- DE-A1-102006 019 168
- DE-A1-102009 027 694
- FR-A- 1 374 103
- GB-A- 2 103 534
- JP-A- H0 410 916
- JP-A- S59 224 314
- JP-A- 2008 093 957

## Beschreibung

### Technisches Gebiet

Die vorliegende Erfindung betrifft ein Spritzgießwerkzeug und ein entsprechendes Verfahren zum Umspritzen von Bauteilen.

### Stand der Technik

Es ist bekannt, beispielsweise metallische Formteile, mit spritzgießfähigem Kunststoff zu ummanteln, beispielsweise mit thermoplastischem Material. Um den Spritzvorgang ordnungsgemäß durchführen zu können, ist eine Kavität vorgesehen, in der in der Regel Zentrierstifte angeordnet sind, mittels derer das Formteil innerhalb der Kavität des Werkzeugs auf Abstand von der Wandung des Werkzeuges gehalten wird. Auf diese Weise ist es möglich, das Formteil nach dem Einlegen in die Kavität nahezu vollständig mit Kunststoff zu umspritzen. Allerdings bleiben Bereiche, an denen die Zentrierstifte eingreifen, frei von Kunststoffmasse.

Da das Formteil aber nicht vollständig mit Kunststoff umspritzt ist, ist es zur Vermeidung beispielsweise von Korrosionserscheinungen oder dergleichen, die am Formteil auftreten können, erforderlich, dass das gesamte Formteil, welches beispielsweise aus Stahl besteht oder an welchem Schrauben und Bolzen angebracht sind, mit einem Korrosionsschutzüberzug zu versehen. Diese herkömmliche Verfahrensweise führt zu relativ hohen Kosten, weil zusätzlich zum Herstellungsvorgang des Formteils und zu dem Umspritzvorgang des Formteils auch noch eine Korrosionsbeschichtung auf das Formteil aufgebracht werden muss.

Die DE 103 26 794 B4 beschreibt ein Verfahren zum Umspritzen eines metallischen Formteiles mit Kunststoff, wobei das Formteil in die Kavität eines Spritzgießwerkzeuges eingelegt, mittels Zentrierstiften positioniert und auf Abstand von der umgebenden Wandung der Kavität gehalten wird, nachfolgend der Kunststoff in die Kavität eingespritzt wird, so dass der Hohlraum zwischen dem Formteil und der Wandung der Kavität gefüllt wird, und anschließend das umspritzte Formteil nach dem Öffnen des Spritzgießwerkzeuges aus der Kavität entnommen wird, zu schaffen, das es ermöglicht, auf eine Korrosionsbeschichtung des Formteiles zu verzichten, wird vorgeschlagen, dass die Zentrierstifte federnd an das Formteil angedrückt werden und beim Spritzvorgang durch die eingespritzte Kunststoffmasse vom Formteil abgehoben werden.

Die JP H 04 10 916 zeigt eine feste Form mit einer beweglichen Form kombiniert, in der ein Verstärkungselement an vorbestimmten Stellen in einem Hohlraum mittels Haltestangen gehalten wird, die durch Federn unter solchen Bedingungen mit geschmolzenem Harz gehalten werden, wird durch einen Anguss aus einer Düse einer Spritzgießmaschine in den Hohlraum eingespritzt. Wenn das geschmolzene Harz in den der Stangen durch den Druck des Harzes gedrückt werden. Der Druck des Harzes überwindet die Federkraft der Federn, so dass sich die Stangen bis zu den Oberflächen des Hohlraums zurückziehen, um die Lücken zwischen den Basen der zu beseitigen Stangen und Montageplatten, wobei das Füllen des Harzes beendet ist und ein geformter Gegenstand gebildet wird.

EP 1 385 684 offenbart "sensing devices 29", welche lediglich Aushärtungs-Parameter ("curing Parameters") erfassen.

### Beschreibung der Erfindung

Eine Aufgabe der Erfindung ist es, unter Einsatz konstruktiv möglichst einfacher Mittel ein vollumfängliches Umspritzen von Bauteilen, beispielsweise von Bolzen und Schrauben, zu ermöglichen, sodass auf zusätzliche Nachbearbeitungsschritte verzichtet werden kann. Die Aufgabe wird durch ein Spritzgießwerkzeug und ein Verfahren gemäß den Merkmalen durch die Gegenstände der unabhängigen Ansprüche gelöst. Vorteilhafte Weiterbildungen der Erfindung sind in den abhängigen Ansprüchen, der Beschreibung und den begleitenden Figuren angegeben.

Ein erfindungsgemäßes Spritzgießwerkzeug umfasst ein erstes und ein zweites Werkzeugbauteil. Zwischen den beiden Werkzeugbauteilen wird zumindest in einer Schließposition eine Kavität ausgebildet. In einer Öffnungsposition kann die Kavität zumindest zum Teil von dem ersten Werkzeugbauteil und zumindest zum Teil von dem zweiten Werkzeugbauteil ausgebildet sein, die sich in der Schließposition zu einer Kavität ergänzen.

Das zweite Werkzeugbauteil besitzt im Bereich der Kavität einen Bereich zum Einlegen eines Bauteils. Beispielsweise kann es sich hierbei um eine Vertiefung oder Aufnahme handeln, die bevorzugt an die Außenkontur des einzulegenden Bauteils angepasst ist. Bei dem Bauteil handelt es sich bevorzugt um einen Bolzen oder eine Schraube. Das Bauteil ist bevorzugt nicht vollständig innerhalb des Werkzeugbauteils angeordnet.

Des Weiteren umfasst das erste Werkzeugbauteil eine Positioniervorrichtung. Die Positioniervorrichtung ist erfindungsgemäß dazu ausgebildet, das Bauteil in dem zweiten Werkzeugbauteil zumindest in der Schließposition kraftschlüssig fixiert zu halten. Dies kann beispielsweise erforderlich sein, um zu verhindern, dass das Bauteil während des Spritzgießprozesses verrutscht. Die kraftschlüssige Fixierung kann dabei zum Beispiel erfolgen, in dem die Positioniervorrichtung bspw. eine mechanische Kraft mithilfe eines Stiftes oder Stempels auf das Bauteil ausübt. Die Positioniervorrichtung ist jedoch darüber hinaus dazu ausgebildet, während eines Einbringens eines Spritzgießmaterials in die Kavität die Fixierung des Bauteils zu lösen, so dass das Spritzgießmaterial zwischen Bauteil und Positioniervorrichtung gelangt. Dies kann beispielsweise realisiert sein, indem die Positioniervorrichtung beweglich ausgebildet ist, so dass die kraftschlüssige Fixierung dadurch gelöst wird, in dem sich die Positioniervorrichtung von dem Bauteil wegbewegt und dieses frei gibt. Das Lösen der kraftschlüssigen Fixierung kann zum Beispiel aktiv erfolgen, indem beispielsweise eine Steuereinrichtung zum Beispiel in Abhängigkeit von definierten Prozessparametern, die Positioniervorrichtung entsprechend ansteuert, um die kraftschlüssige Fixierung des Bauteils durch die Positioniervorrichtung zu lösen. Das Lösen der Fixierung kann jedoch auch passiv erfolgen, indem beispielsweise die Positioniervorrichtung die Fixierung löst, sobald eine definierte Gegenkraft zumindest bereichsweise auf die Positioniervorrichtung wirkt. Beispielsweise kann die Fixierung in diesem Fall durch eine definierte Vorspannung erzeugt werden, wobei die Fixierung gelöst wird, wenn eine Gegenkraft, die beispielsweise durch das Spritzgießmaterial erzeugt wird, größer ist als die Kraft, die durch die definierte Vorspannung erzeugt wird.

An dem ersten Werkzeugbauteil und/oder an dem zweiten Werkzeugbauteil sind Sensormittel zum Ermitteln des Innendrucks des Spritzgießmaterials innerhalb der Kavität angeordnet. Diese Sensormittel sind mit einer Steuereinheit verbunden, welche entsprechend des gemessenen Innendrucks die Zufuhr des Spritzgießmaterials steuert. Sobald der ermittelte Innendruck impliziert, dass die Kavität weitestgehend mit Material gefüllt ist, wird der Druck des einzubringenden Spritzgießmaterials, der sogenannte Nachdruck, eingestellt. Dieser Nachdruck erzeugt bevorzugt eine Kraft, die höher ist als die von der Positioniervorrichtung, insbesondere Federeinheit, ausgeübte Kraft, insbesondere Federkraft, auf das Bauteil. Der Nachdruck kann dadurch genutzt werden, um das Bauteil aus der kraftschlüssigen Fixierung der Positioniervorrichtung zu lösen.

Unter Innendruck wird in diesem Zusammenhang die Kraft pro Fläche verstanden, die auf die Kavität wirkt. Durch das Einbringen des Spritzgießmaterials in die Kavität kann das Spritzgießmaterial einen Druck auf die Kavität ausüben, was zu einer Zunahme des Innendrucks führen kann.

Durch das erfindungsgemäße Spritzgusswerkzeug ist es möglich, Bauteile mit einem Spritzgießmaterial zu umspritzen, wobei das Bauteil im umspritzten Bereich frei von Freistellen ist, an dem kein Spritzgussmaterial das Bauteil bedeckt. Auf diese Weise sind keine weiteren Nachbearbeitungsschritte des Bauteils im umspritzten Bereich notwendig.

Bevorzugt umfasst die Positioniervorrichtung eine Federeinheit und eine Stifteinheit und ist von einem Gehäuse zumindest teilweise umgeben. Das Gehäuse weist bevorzugt an der der Kavität zugewandten Seite eine Öffnung auf, durch welche die Stifteinheit zumindest abschnittsweise in die Kavität hineinragt. Die Stifteinheit tritt bevorzugt mit einem in die Kavität hineinragenden Ende mit dem Bauteil in Kontakt, um das Bauteil kraftschlüssig zu fixieren.

Die Stifteinheit umfasst bevorzugt ein trapezförmiges Ende, wobei auch jede weitere Form denkbar ist, solange das Ende keine Spitze aufweist. Bei einem spitzen Ende würde die Gefahr bestehen, dass diese einem sehr hohen Verschleiß ausgesetzt ist und entsprechend eine geringere Lebenszeit aufweist. Weiter ist es mit einem spitzen Ende eher schwierig einen gleichmäßig verteilten Druck aufzubauen. Eine Trapezform des Endes wird jedoch bevorzugt, da sich so die Stifteinheit zum Ende hin verjüngt, ohne eine Spitze auszubilden.

Vorzugsweise ist die Stifteinheit linear beweglich gelagert und kann, insbesondere durch eine Spannung und Entspannung der Federeinheit, bewegbar sein. Besonders bevorzugt erfolgt die lineare Beweglichkeit der Stifteinheit dabei derart, dass sich die Stifteinheit zumindest anteilig in die Kavität hinein und zumindest anteilig aus der Kavität hinausbewegt.

Bevorzugt fixiert die Positioniervorrichtung das Bauteil kraftschlüssig, indem eine Federkraft der Federeinheit die Stifteinheit zumindest in der Schließposition gegen das Bauteil drückt. Auf diese Weise ist es möglich, dass das Bauteil prozesssicher im zweiten Werkzeugbauteil gehalten wird, ohne dass die Positioniervorrichtung aktiv angesteuert werden muss, um ein definiertes Lösen der Stifteinheit während des Einbringens des Spritzgießmaterials sicher zu stellen. Das Lösen der Stifteinheit vom Bauteil kann in diesem Fall beispielsweise über den Innendruck des Spritzgießmaterials eingestellt werden.

Die Federeinheit weist bevorzugt eine Federkraft von 20 N bis 80 N, insbesondere 40 N bis 60 N, besonders bevorzugt eine Federkraft von 50 N bis 55 N auf.

Das Bauteil umfasst bevorzugt einen Schaft und einen Kopf. Der Schaft ragt dabei besonders bevorzugt in das zweite Werkzeugbauteil hinein, wobei der Kopf bevorzugt außerhalb des zweiten Werkzeugbauteils, insbesondere in der Kavität angeordnet ist. Das zweite Werkzeugbauteil kann eine Aufnahme aufweisen, in die der Schaft des Bauteils einbringbar ist. Die Aufnahme kann dabei der Außenkontur des Schaftes folgend ausgebildet sein. Dies kann zum Beispiel erforderlich sein, um zu verhindern, dass Spritzgießmaterial in die Aufnahme hineinläuft. Weiterhin kann der Kopf auf dem zweiten Werkzeugbauteil aufliegen. Dadurch kann zusätzlich sichergestellt werden, dass beim Einbringen von Spritzgießmaterial die Aufnahme frei von Spritzgießmaterial bleibt. Besonders bevorzugt übt beim Schließen der Werkzeugbauteile die Positioniervorrichtung Druck auf das Bauteil aus und dichtet die Kontaktfläche zwischen Kopf und zweitem Werkzeugbauteil ab.

Es ist weiterhin bevorzugt, dass das zweite Werkzeugbauteil einen Magneten umfasst, welcher nach Einlegen des Bauteils in die Kavität das Bauteils vorfixiert, so dass durch das Halteelement beim Schließen der Werkzeugbauteile sich das Bauteil bereits in einer annähernd richtigen Position befindet. Das Bauteil ist in diesem Fall bevorzugt zumindest teilweise ferromagnetisch.

Neben dem Spritzgießwerkzeug umfasst die Erfindung auch ein Verfahren zum Umspritzen eines Bauteils in einem erfindungsgemäßen Spritzgießwerkzeug, das zumindest die folgenden Schritte umfasst:
- Einlegen des Bauteils in ein zweites Werkzeugbauteil im Bereich der Kavität, die zwischen dem zweiten und einem ersten Werkzeugbauteil zumindest in einer Schließposition ausgebildet wird;
- Schließen der beiden Werkzeugbauteile;
- kraftschlüssiges Fixieren des Bauteils mittels der in dem ersten Werkzeugbauteil angeordneten Positioniervorrichtung;
- Einbringen von Spritzgießmaterial in die Kavität;
- Ermitteln eines Innendrucks des in die Kavität (4) eingebrachten Spritzgießmaterials mittels eines Sensormittels, während dem Einbringen (14) des Spritzgießmaterials,
- Steuern einer Zufuhr des Spritzgießmaterials mittels einer mit dem Sensormittel verbundenen Steuereinheit, basierend auf dem ermittelten Innendruck,
- Lösen der Positioniervorrichtung vom Bauteil während des Einbringens des
- Spritzgießmaterials, so dass das Spritzgießmaterial zwischen Positioniervorrichtung und Bauteil gelangt, und
- Öffnen der Werkzeugbauteile und Entnahme des umspritzten Bauteils.

Es wird also der Innendruck während dem Einbringen des Spritzgießmaterials mittels des Sensormittels ermittelt und entsprechend der gemessenen Daten das Spritzgießmaterial dosiert.

Es ist bevorzugt, dass während des Schrittes des Lösens die Positioniervorrichtung mithilfe der Stifteinheit, die mittels einer Federkraft der Federeinheit gegen das Bauteil gedrückt wird, das Bauteil kraftschlüssig in dem zweiten Werkzeugbauteil fixiert hält. Das Spritzgießmaterial gelangt dabei bevorzugt zwischen Bauteil und Stifteinheit. Dies kann beispielsweise durch eine entsprechende Formgebung der Stifteinheit sichergestellt sein. Beispielsweise kann die Stifteinheit eine Trapezform am einem Ende aufweisen, mit dem das Bauteil vorfixiert wird. Die kraftschlüssige Fixierung zwischen Bauteil und Positioniervorrichtung kann dabei mithilfe des Innendrucks des Spritzgießmaterial gelöst werden.

Weiterhin ist es von Vorteil, wenn das Bauteil im zweiten Werkzeugbauteil vorfixiert wird. Das Vorfixieren erfolgt dabei bevorzugt nach dem Einlegen des Bauteils und vor dem Schließen der beiden Werkzeugbauteile. Das Vorfixieren erfolgt bevorzugt, indem das, insbesondere zumindest teilweise ferromagnetische, Bauteil mittels eines in dem zweiten Werkzeugbauteil befindlichen Magneten gehalten wird.

Durch diese Vorrichtung und entsprechendes Verfahren kann ohne zusätzliche Prozessschritte ein Verschließen von blanken Stellen, die beim Positionieren und anschließendem Umspritzen von Einlegeteilen entstehen, ermöglicht werden.

### Kurze Figurenbeschreibung

Nachfolgend wird ein vorteilhaftes Ausführungsbeispiel der Erfindung unter Bezugnahme auf die begleitenden Figuren erläutert. Es zeigen:
- Figur 1: einen Querschnitt eines erfindungsgemäßen Spritzgießwerkzeugs mit einem eingelegten Bauteil im geschlossenen Zustand;
- Figur 2: einen Querschnitt durch eine erste Werkzeughälfte des erfindungsgemäßen Spritzgießwerkzeugs;
- Figur 3a: Draufsicht eines teilumspritzten Bauteils; und
- Figur 3b: Draufsicht eines vollumfänglich umspritzten Bauteils.

Die Figuren sind lediglich schematische Darstellungen und dienen nur der Erläuterung der Erfindung. Gleiche oder gleichwirkende Elemente sind durchgängig mit den gleichen Bezugszeichen versehen.

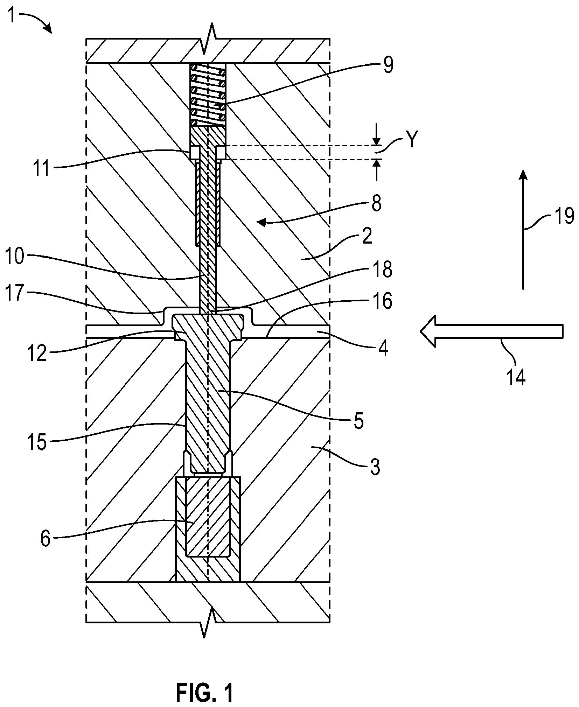

Figur 1 zeigt einen Querschnitt eines erfindungsgemäßen Spritzgießwerkzeugs 1 mit einem eingelegten Bauteil 5, wobei sich das Spritzgießwerkzeug 1 in einer Schließposition befindet. Das Bauteil 5 ist bevorzugt ein metallisches, ferromagnetisches Teil aus Stahl oder Aluminium oder einem ähnlichen Material. Das Bauteil 5 ist zum Teil in eine Kavität 4 des Spritzgießwerkzeugs 1 eingelegt. Das Spritzgießwerkzeug 1 besteht aus zwei Werkzeugbauteilen 2, 3.

Durch ein in dem zweiten Werkzeugbauteil 3 angeordneten Magneten 6 wird das Bauteil 5, welches im vorliegenden Ausführungsbeispiel eine Schraube ist, vorfixiert und wird somit auch im nicht gezeigten geöffneten Zustand des Spritzgießwerkzeugs 1 auf Position gehalten. Das Bauteil 5 kann auch aus einem nicht magnetischen Material gefertigt sein. Sollte dies der Fall sein ist ein anderer Fixiermechanismus vorzusehen. Das Bauteil 5 umfasst einen in das zweite Werkzeugbauteil 3 hineinragenden Schaft 15 und einen aus dem zweiten Werkzeugbauteil 3 herausragenden Kopf 12, der innerhalb der Kavität 4 angeordnet ist und auf dem zweiten Werkzeugbauteil 3 auf der Werkzeugoberfläche 16 aufliegt.

Die Fläche der ersten Werkzeughälfte 2, welche an die Kavität 4 angrenzt, ist der Kontur des Bauteils 5, insbesondere im Bereich des zu umspritzenden Kopfes 12 angepasst. Das heißt, dass im Bereich des Kopfes 12 die erste Werkzeughälfte eine Vertiefung 17 aufweist, welche so dimensioniert ist, dass das einzubringende Spritzgießmaterial 14 in der Kavität 4 um den Kopf 12 gespritzt werden kann. Bevorzugt ist die Wandstärke in einem Bereich von 1,5 mm bis 2,5 mm.

In der Vertiefung 17 der ersten Werkzeughälfte 2 ist eine Öffnung 18 vorgesehen, durch welche ein Ende 13 einer Positioniervorrichtung 8 herausragt. Die Positioniervorrichtung 8 umfasst eine Stifteinheit 10, welche mit einer Federeinheit 9 verbunden ist. Beim Schließen des Spritzgießwerkzeugs 1 drückt die Stifteinheit 10 das Bauteil 5 auf Position und wird somit kraftschlüssig fixiert. Durch die Fixierung des Bauteils 5 mithilfe der Positioniervorrichtung 8, wird der Kopf 12 gegen die Werkzeugoberfläche 16 gedrückt und beim Einbringen 14 von Spritzgießmaterial kann somit kein Material zwischen Schaft 15 und zweites Werkzeugbauteil 3 eindringen. Die Bewegungsfreiheit y der Stifteinheit 10 beträgt mindestens die auszugleichende Toleranz des Bauteils 5 und die erforderliche Wandstärke, d.h. sie liegt im Bereich von 0,5 mm bis 2,5 mm.

Das Einbringen 14 von Spritzgießmaterial ist mittels des Pfeils 19 dargestellt. Das Einbringen 14 ist allerdings nicht auf eine Seite bezogen, d.h. kann auch von der gegenüberliegenden Seite erfolgen oder von beiden Seiten gleichzeitig erfolgen. Im Zuge des Einbringens 14 des Spritzgießmaterials wird die Kavität 4 vollständig mit Material gefüllt.

Mittels Sensormittel (nicht dargestellt) wird der Innendruck des Spritzgießmaterials in der Kavität 4 gemessen. Sobald der Innendruck größer ist als die Federkraft der Federeinheit 9 wird mittels Nachdrucks des Spritzgießmaterials die Stifteinheit 10 in Pfeilrichtung 20 gedrückt und die Federeinheit 9 gestaucht. Dadurch gelangt das Spritzgießmaterial vollständig zwischen die Stifteinheit 10 und das Bauteil 5, so dass die Oberfläche des Kopfes 12 vollständig mit dem Spritzgießmaterial bedeckt wird. Da die Kavität 4 bereits vollkommen mit Spritzgießmaterial gefüllt ist, kann das Bauteil 5 nicht mehr bewegt werden und behält seine Position bei.

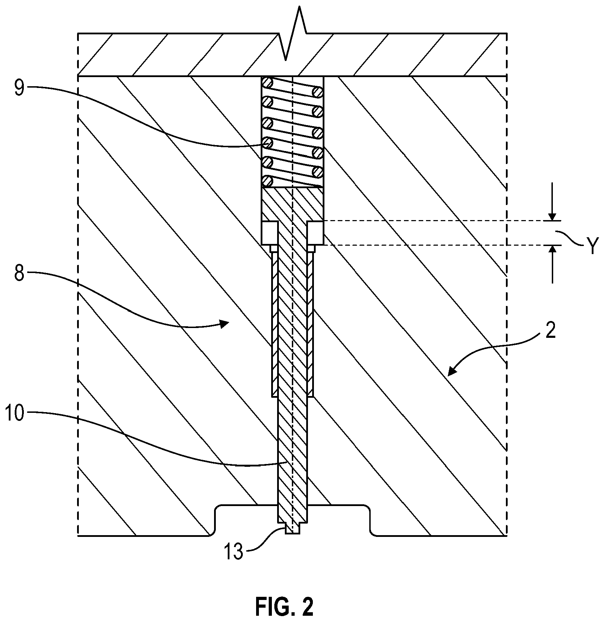

Figur 2 zeigt die Positioniervorrichtung 8 in einer Position, in welcher die Positioniervorrichtung 8 noch nicht in Berührung mit dem Bauteil 5 ist. Das Ende 13 der Stifteinheit 10 weist einen mittigen Vorsprung auf. Durch diesen Vorsprung kann eine Kraft auf das Bauteil 5 aufgebaut werden. Das Ende kann allerdings auch flach oder in einer anderen nicht spitzen Form ausgebildet werden.

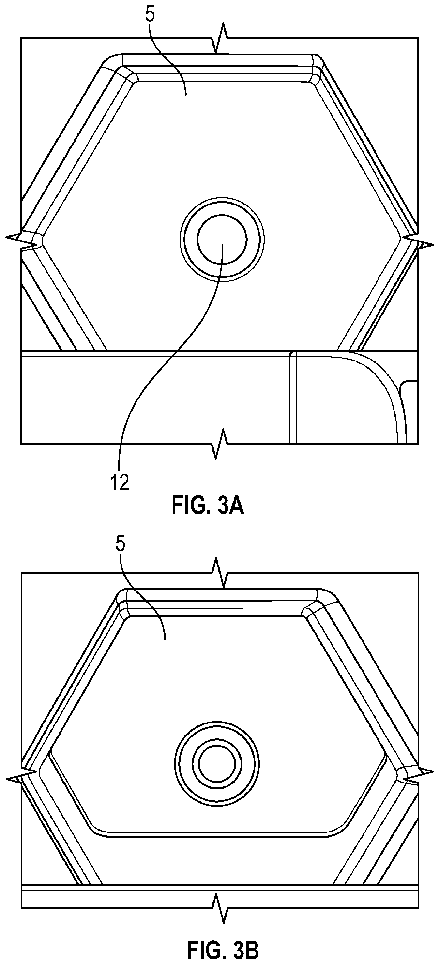

Figur 3a zeigt eine nicht erfindungsgemäße Ausführungsform, bei der eine blanke Stelle nach dem Umspritzen zurückbleibt und der Kopf 12 auch nach dem Umspritzen noch sichtbar ist. Dahingegen zeigt Figur 3b eine vollständige Umspritzung, bei welcher das Material des Bauteils 5 im Bereich des Kopfes 12 von Spritzgießmaterial bedeckt ist.

### BEZUGSZEICHENLISTE

- 1: Spritzgießwerkzeug
- 2: erstes Werkzeugbauteil
- 3: zweites Werkzeugbauteil
- 4: Kavität
- 5: Bauteil
- 6: Magnet
- 8: Positioniervorrichtung
- 9: Federeinheit
- 10: Stifteinheit
- 11: Gehäuse
- 12: Kopf
- 13: Ende Stifteinheit
- 14: Einbringen von Spritzgießmaterial
- 15: Schaft
- 16: Werkzeugoberfläche
- 17: Vertiefung
- 18: Öffnung
- 19: Bewegungsrichtung

## Patentansprüche

1. Spritzgießwerkzeug (1), umfassend ein erstes Werkzeugbauteil (2) und ein zweites Werkzeugbauteil (3), wobei
- zwischen dem ersten Werkzeugbauteil (2) und dem zweiten Werkzeugbauteil (3) zumindest in einer Schließposition eine Kavität (4) ausgebildet ist,
- das zweite Werkzeugbauteil (3) im Bereich der Kavität (4) einen Bereich zum Einlegen eines Bauteils (5) aufweist,
- das erste Werkzeugbauteil (2) eine Positioniervorrichtung (8) umfasst, die ausgebildet ist, das Bauteil (5) in dem zweiten Werkzeugbauteil (3) zumindest in der Schließposition kraftschlüssig fixiert zu halten und während eines Einbringens (14) eines Spritzgießmaterials in die Kavität (4) die Fixierung des Bauteils (5) zu lösen, sodass das Spritzgießmaterial zwischen Bauteil (5) und Positioniervorrichtung (8) gelangt,
- und wobei das erste Werkzeugbauteil (2) und/oder das zweite Werkzeugbauteil (3) ein Sensormittel zum Ermitteln eines Innendrucks des in die Kavität (4) eingebrachten Spritzgießmaterials (14) enthält, und das Sensormittel mit einer Steuereinheit verbunden ist, mittels derer entsprechend des gemessenen Innendrucks eine Zufuhr des Spritzgießmaterials (14) steuerbar ist.

2. Spritzgießwerkzeug (1) nach Anspruch 1, wobei die Positioniervorrichtung (8) eine Federeinheit (9) und eine Stifteinheit (10) umfasst und von einem Gehäuse (11) zumindest abschnittsweise umgeben ist.

3. Spritzgießwerkzeug (1) nach Anspruch 2, wobei das Gehäuse (11) an der der Kavität (4) zugewandten Seite eine Öffnung (18) aufweist, durch welche die Stifteinheit (10) zumindest abschnittsweise in die Kavität (4) ragt.

4. Spritzgießwerkzeug (1) nach Anspruch 2 oder 3, wobei die Stifteinheit (10) linear beweglich gelagert ist.

5. Spritzgießwerkzeug (1) nach einem der Ansprüche 2 bis 4, wobei die Positioniervorrichtung (8) das Bauteil (5) kraftschlüssig fixiert, indem eine Federkraft der Federeinheit (9) die Stifteinheit (10) zumindest in der Schließposition gegen das Bauteil (5) drückt.

6. Spritzgießwerkzeug (1) nach einem der Ansprüche 2 bis 5, wobei die Federeinheit (9) eine Federkraft von 20 N bis 80 N, insbesondere 40 N bis 60 N, insbesondere 50 N bis 55 N aufweist.

7. Spritzgießwerkzeug (1) nach einem der vorhergehenden Ansprüche, wobei das Bauteil (5) einen Schaft (15) und einen Kopf (12) aufweist, wobei der Schaft (15) in das zweite Werkzeugbauteil (3) hineinragt und der Kopf (12) außerhalb des zweiten Werkzeugbauteils (3), insbesondere in der Kavität (4) angeordnet ist.

8. Spritzgießwerkzeug (1) nach einem der vorhergehenden Ansprüche, wobei das zweite Werkzeugbauteil (3) mindestens einen Magnet (6) aufweist, und das Bauteil (5) zumindest teilweise ferromagnetisch ist, sodass nach Einlegen des Bauteils (5) in das zweite Werkzeugbauteil (3) das Bauteil (5) mithilfe des Magneten (6) vorfixiert ist.

9. Verfahren zum Umspritzen eines Bauteils (5) in einem Spritzgießwerkzeug (1) nach einem der vorhergehenden Ansprüche, umfassend die Schritte:
- Einlegen des Bauteils (5) in ein zweites Werkzeugbauteil (3) im Bereich einer Kavität (4), die zwischen dem zweiten und einem ersten Werkzeugbauteil (2, 3) zumindest in einer Schließposition ausgebildet wird,
- Schließen der beiden Werkzeugbauteile (2, 3),
- kraftschlüssiges Fixieren des Bauteils (5) mittels einer in dem ersten Werkzeugbauteil (2) angeordneten Positioniervorrichtung (8),
- Einbringen (14) von Spritzgießmaterial in die Kavität (4),
- Ermitteln eines Innendrucks des in die Kavität (4) eingebrachten Spritzgießmaterials mittels eines Sensormittels, während dem Einbringen (14) des Spritzgießmaterials,
- Steuern einer Zufuhr des Spritzgießmaterials mittels einer mit dem Sensormittel verbundenen Steuereinheit, basierend auf dem ermittelten Innendruck,
- Lösen der Positioniervorrichtung (8) vom Bauteil (5) während des Einbringens (14) des Spritzgießmaterials, so dass das Spritzgießmaterial zwischen Positioniervorrichtung (8) und Bauteil (5) gelangt.
- Öffnen der Werkzeugbauteile (2, 3) und Entnahme des umspritzten Bauteils (5).

10. Verfahren nach Anspruch 8, wobei während des Schrittes des Lösens die Positioniervorrichtung (8) mithilfe einer Stifteinheit (10), die mittels einer Federkraft einer Federeinheit (9) gegen das Bauteil (5) gedrückt wird, das Bauteil (5) kraftschlüssig in dem zweiten Werkzeugbauteil (3) fixiert hält, und das Spritzgießmaterial zwischen Bauteil (5) und Stifteinheit (10) gelangt, wobei die kraftschlüssige Fixierung zwischen Bauteil (5) und Positioniervorrichtung (8) mithilfe des Innendrucks des Spritzgießmaterial gelöst wird.

11. Verfahren nach Anspruch 8 oder 9, weiter umfassend: Vorfixieren des, insbesondere zumindest teilweise ferromagnetischen, Bauteils (5) mittels eines in dem zweiten Werkzeugbauteil (3) befindlichen Magneten (6).

## Claims

1. Injection-moulding tool (1), comprising a first tool component (2) and a second tool component (3), wherein
- a cavity (4) is formed between the first tool component (2) and the second tool component (3) at least in a closed position,
- the second tool component (3) has, in the region of the cavity (4), a region for the insertion of a component (5),
- the first tool component (2) comprises a positioning apparatus (8) which is configured to hold the component (5) in the second tool component (3) in a force-fittingly fixed manner at least in the closed position, and to release the fixing of the component (5) during introduction (14) of an injection moulding material into the cavity (4), such that the injection moulding material passes between component (5) and positioning apparatus (8),
- and wherein the first tool component (2) and/or the second tool component (3) contains a sensor means for ascertaining an internal pressure of the injection moulding material (14) introduced into the cavity (4), and the sensor means is connected to a control unit which can control a supply of injection moulding material (14) in accordance with the measured internal pressure.

2. Injection-moulding tool (1) according to Claim 1, wherein the positioning apparatus (8) comprises a spring unit (9) and a pin unit (10) and is at least partially surrounded by a housing (11).

3. Injection-moulding tool (1) according to Claim 2, wherein the housing (11) has, on the side facing towards the cavity (4), an opening (18) through which the pin unit (10) at least partially projects into the cavity (4).

4. Injection-moulding tool (1) according to Claim 2 or 3, wherein the pin unit (10) is mounted in a linearly movable manner.

5. Injection-moulding tool (1) according to one of Claims 2 to 4, wherein the positioning apparatus (8) fixes the component (5) in a force-fitting manner by a spring force of the spring unit (9) pushing the pin unit (10) against the component (5) at least in the closed position.

6. Injection-moulding tool (1) according to one of Claims 2 to 5, wherein the spring unit (9) has a spring force of 20 N to 80 N, in particular 40 N to 60 N, in particular 50 N to 55 N.

7. Injection-moulding tool (1) according to one of the preceding claims, wherein the component (5) has a shaft (15) and a head (12), wherein the shaft (15) projects into the second tool component (3) and the head (12) is arranged outside the second tool component (3), in particular in the cavity (4).

8. Injection-moulding tool (1) according to one of the preceding claims, wherein the second tool component (3) has at least one magnet (6), and the component (5) is at least partially ferromagnetic, such that the component (5) is pre-fixed by means of the magnet (6) after the component (5) has been inserted into the second tool component (3).

9. Method for overmoulding a component (5) in an injection-moulding tool (1) according to one of the preceding claims, comprising the following steps:
- inserting the component (5) into a second tool component (3) in the region of a cavity (4) which is formed between the second and a first tool component (2, 3) at least in a closed position,
- closing the two tool components (2, 3),
- fixing the component (5) in a force-fitting manner by means of a positioning apparatus (8) which is arranged in the first tool component (2) ,
- introducing (14) injection moulding material into the cavity (4),
- ascertaining, during the introduction (14) of the injection moulding material, an internal pressure of the injection moulding material introduced into the cavity (4) by means of a sensor means,
- controlling, based on the internal pressure ascertained, a supply of the injection moulding material by means of a control unit which is connected to the sensor means,
- releasing the positioning apparatus (8) from the component (5) during the introduction (14) of the injection moulding material, such that the injection moulding material passes between positioning apparatus (8) and component (5),
- opening the tool components (2, 3) and removing the overmoulded component (5).

10. Method according to Claim 8, wherein, during the releasing step, the positioning apparatus (8) uses a pin unit (10), which is pushed against the component (5) by means of a spring force of a spring unit (9), to hold the component (5) in the second tool component (3) in a force-fittingly fixed manner, and the injection moulding material passes between component (5) and pin unit (10), wherein the force-fitting fixing between component (5) and positioning apparatus (8) is released by means of the internal pressure of the injection moulding material.

11. Method according to Claim 8 or 9, further comprising: pre-fixing the in particular at least partially ferromagnetic component (5) by means of a magnet (6) located in the second tool component (3).

## Revendications

1. Outil de moulage par injection (1), comprenant un premier composant d'outil (2) et un deuxième composant d'outil (3), dans lequel
- une cavité (4) est formée entre le premier composant d'outil (2) et le deuxième composant d'outil (3) au moins dans une position de fermeture,
- le deuxième composant d'outil (3) présente dans la zone de la cavité (4) une zone pour l'insertion d'un composant (5),
- le premier composant d'outil (2) comprend un dispositif de positionnement (8), qui est configuré pour maintenir le composant (5) fixé par friction dans le deuxième composant d'outil (3) au moins dans la position de fermeture et pour détacher la fixation du composant (5) pendant une introduction (14) d'un matériau de moulage par injection dans la cavité (4), de telle sorte que le matériau de moulage par injection parvient entre le composant (5) et le dispositif de positionnement (8),
- et dans lequel le premier composant d'outil (2) et/ou le deuxième composant d'outil (3) contiennent un moyen de détection pour déterminer une pression interne du matériau de moulage par injection (14) introduit dans la cavité (4), et le moyen de détection est relié à une unité de commande, au moyen de laquelle une amenée du matériau de moulage par injection (14) peut être commandée en fonction de la pression interne mesurée.

2. Outil de moulage par injection (1) selon la revendication 1, dans lequel le dispositif de positionnement (8) comprend une unité à ressort (9) et une unité à broche (10) et est entouré au moins par sections par un boîtier (11).

3. Outil de moulage par injection (1) selon la revendication 2, dans lequel le boîtier (11) présente, sur le côté tourné vers la cavité (4), une ouverture (18) à travers laquelle l'unité à broche (10) fait saillie au moins par sections dans la cavité (4).

4. Outil de moulage par injection (1) selon la revendication 2 ou 3, dans lequel l'unité à broche (10) est montée de manière à pouvoir être déplacée linéairement.

5. Outil de moulage par injection (1) selon l'une quelconque des revendications 2 à 4, dans lequel le dispositif de positionnement (8) fixe le composant (5) par friction, par le fait qu'une force de ressort de l'unité à ressort (9) pousse l'unité à broche (10) contre le composant (5) au moins dans la position de fermeture.

6. Outil de moulage par injection (1) selon l'une quelconque des revendications 2 à 5, dans lequel l'unité à ressort (9) présente une force de ressort de 20 N à 80 N, notamment de 40 N à 60 N, notamment de 50 N à 55 N.

7. Outil de moulage par injection (1) selon l'une quelconque des revendications précédentes, dans lequel le composant (5) présente une tige (15) et une tête (12), dans lequel la tige (15) s'enfonce dans le deuxième composant d'outil (3) et la tête (12) est agencée à l'extérieur du deuxième composant d'outil (3), notamment dans la cavité (4).

8. Outil de moulage par injection (1) selon l'une quelconque des revendications précédentes, dans lequel le deuxième composant d'outil (3) présente au moins un aimant (6), et le composant (5) est au moins partiellement ferromagnétique, de telle sorte qu'après l'insertion du composant (5) dans le deuxième composant d'outil (3), le composant (5) est fixé de manière préliminaire à l'aide de l'aimant (6).

9. Procédé de surmoulage d'un composant (5) dans un outil de moulage par injection (1) selon l'une quelconque des revendications précédentes, comprenant les étapes suivantes :
- l'insertion du composant (5) dans un deuxième composant d'outil (3) dans la zone d'une cavité (4), qui est formée entre le deuxième et un premier composant d'outil (2, 3) au moins dans une position de fermeture,
- la fermeture des deux composants d'outil (2, 3),
- la fixation par friction du composant (5) au moyen d'un dispositif de positionnement (8) agencé dans le premier composant d'outil (2),
- l'introduction (14) de matériau de moulage par injection dans la cavité (4),
- la détermination d'une pression interne du matériau de moulage par injection introduit dans la cavité (4) au moyen d'un moyen de détection, pendant l'introduction (14) du matériau de moulage par injection,
- la commande d'une amenée du matériau de moulage par injection au moyen d'une unité de commande reliée au moyen de détection, sur la base de la pression interne déterminée,
- le détachement du dispositif de positionnement (8) du composant (5) pendant l'introduction (14) du matériau de moulage par injection, de telle sorte que le matériau de moulage par injection parvient entre le dispositif de positionnement (8) et le composant (5),
- l'ouverture des composants de moule (2, 3) et l'extraction du composant surmoulé (5).

10. Procédé selon la revendication 8, dans lequel, pendant l'étape de détachement, le dispositif de positionnement (8) maintient le composant (5) fixé par friction dans le deuxième composant d'outil (3) à l'aide d'une unité à broche (10), qui est pressée contre le composant (5) au moyen d'une force de ressort d'une unité à ressort (9), et le matériau de moulage par injection parvient entre le composant (5) et l'unité à broche (10), dans lequel la fixation par friction entre le composant (5) et le dispositif de positionnement (8) est détachée à l'aide de la pression interne du matériau de moulage par injection.

11. Procédé selon la revendication 8 ou 9, comprenant en outre : la fixation préliminaire du composant (5), notamment au moins partiellement ferromagnétique, au moyen d'un aimant (6) se trouvant dans le deuxième composant d'outil (3).
